Europäisches Patentamt

European Patent Office

Office européen des brevets

(19)

(11) Veröffentlichungsnummer: **0 180 246 B1**

(12) # EUROPÄISCHE PATENTSCHRIFT

(45) Veröffentlichungstag der Patentschrift: **02.05.91**

(51) Int. Cl.⁵: **B23B 51/05**

(21) Anmeldenummer: 85113967.5

(22) Anmeldetag: 02.11.85

(54) **Schneidewerkzeug.**

(30) Priorität: **02.11.84 CH 5300/84**

(43) Veröffentlichungstag der Anmeldung:
**07.05.86 Patentblatt 86/19**

(45) Bekanntmachung des Hinweises auf die
Patenterteilung:
**02.05.91 Patentblatt 91/18**

(84) Benannte Vertragsstaaten:
**FR GB IT SE**

(56) Entgegenhaltungen:
**CH-A- 533 480**
**DE-A- 1 552 484**
**DE-C- 116 118**
**US-A- 2 411 697**
**US-A- 3 306 138**

(73) Patentinhaber: **Val, George**
**Alte Buchserstrasse 14**
**CH-8108 Dällikon(CH)**

(72) Erfinder: **Val, George**
**Alte Buchserstrasse 14**
**CH-8108 Dällikon(CH)**

(74) Vertreter: **Bosshard, Ernst**
**Schulhausstrasse 12**
**CH-8002 Zürich(CH)**

## Beschreibung

Die Erfindung bezieht sich auf eine Vorrichtung zum linearen Verstellen eines Werkzeughalters an einem Schneidwerkzeug, bei welchem der Werkzeughalter in einer [-förmigen Ausnehmung eines um eine Achse drehbar gelagerten Kopfstücks angeordnet und von einer mit einem in eine Bohrung eingreifenden Bolzen wirkverbundenen Gewindespindel in bezug zur Achse des Kopfstücks in radialer Richtung verstellbar ist.

Aus der DE-A 1 552 484 ist eine derartige vorrictung zum Verstellen eines Werkzeughalters für ein Schneid- und Ausdrehwerkzeug bekannt, welches im wesentlichen ein mit einer [-förmigen Ausnehmung versehenes und um seine Achse drehbares Kopfstück umfasst. Der in der [-förmigen Ausnehmung angeordnete und mit im Abstand zueinander angeordneten Bohrungen versehene Werkzeughalter kann bei dieser Vorrichtung einerseits für eine Grobeinstellung durch Versetzen eines Bolzens von einer Bohrung zur anderen Bohrung stufenweise und andererseits für eine geringfügige Feineinstellung durch Betätigung einer mit dem Bolzen wirkverbundenen Gewindespindel in bezug zur Achse des Kopfstücks auf das jeweilige Ausdrehmass eingestellt werden.

Der Erfindung liegt die Aufgabe zugrunde, eine Vorrichtung der eingangs genannten Art dahingehend zu verbessern, dass der Werkzeughalter mittels der Gewindespindel in eingebautem Zustand in bezug zur Achse des Kopfstücks stufenlos und exakt auf das Ausdrehmass einstellbar ist.

Diese Aufgabe wird erfindungsgemäss dadurch gelöst, dass

- in dem Werkzeughalter eine in Richtung der Verstellbewegung orientierte und auf der der zugeordneten Wand der [-förmigen Ausnehmung zugewandten Seite mit einer seitlich offenen Ausnehmung zur Aufnahme des Bolzens sowie der den Bolzen quer zu seiner Achse durchdringenden und damit wirkverbundenen Gewindespindel angeordnet ist, und
- in montiertem Zustand des Werkzeughalters der Bolzen in eine in der zugeordneten Wand der [-förmigen Ausnehmung des Kopfstücks vorgesehene und entsprechend ausgebildete Bohrung derart eingreift, dass bei Betätigung der Gewindespindel der Werkzeughalter relativ zu dem in der Bohrung arretierten Bolzen sowie zu der Achse des Kopfstücks verschiebbar ist.

Die erfindungsgemässe Vorrichtung erbringt ausser der Lösung der Erfindungsaufgabe gegenüber der bekannten Vorrichtung noch weitere Vorteile, welche im wesentlichen darin bestehen, dass die aus dem Bolzen und der Gewindespindel gebildete Spindeleinheit mit unterschiedlichen Gewindearten und Gewindesteigungen versehen sein kann, wobei die einzelne Spindeleinheit bei demontiertem Werkzeughalter in die seitlich offene Ausnehmung des Werkzeughalters einsetzbar und ohne besondere Hilfsmittel aus der Ausnehmung entfernbar sowie gegen eine andere Spindeleinheit auswechselbar ist.

Ein weiterer Vorteil besteht darin, dass der einzelne Werkzeughalter mittels der Spindeleinheit auf ein entsprechendes Ausdrehmass voreinstellbar und somit problemlos gegen einen anderen, voreingestellten Werkzeughalter mit hoher Reproduzierbarkeit auswechselbar ist.

Weitere Merkmale der Erfindung ergeben sich aus der folgenden Beschreibung in Verbindung mit der Zeichnung und den weiteren Patentansprüchen.

Die Erfindung wird nachstehend anhand der Zeichnung beschrieben. Es zeigt:

Fig.1    ein in Ansicht dargestelltes und mit einem Werkzeughalter versehenes Schneidwerkzeug,

Fig.2    das in grösserem Massstab und teilweise in Schnittansicht dargestellte Schneidwerkzeug gemäss Fig.1 mit dem eingebauten Werkzeughalter,

Fig.3    den in Ansicht dargestellten Werkzeughalter für das Schneidwerkzeug,

Fig.4    ein in grösserem Massstab und in Schnittansicht dargestelltes Teilstück des Werkzeughalters, und

Fig.5    eine in Schnittansicht dargestellte Ausführungsvariante gemäss Fig.2.

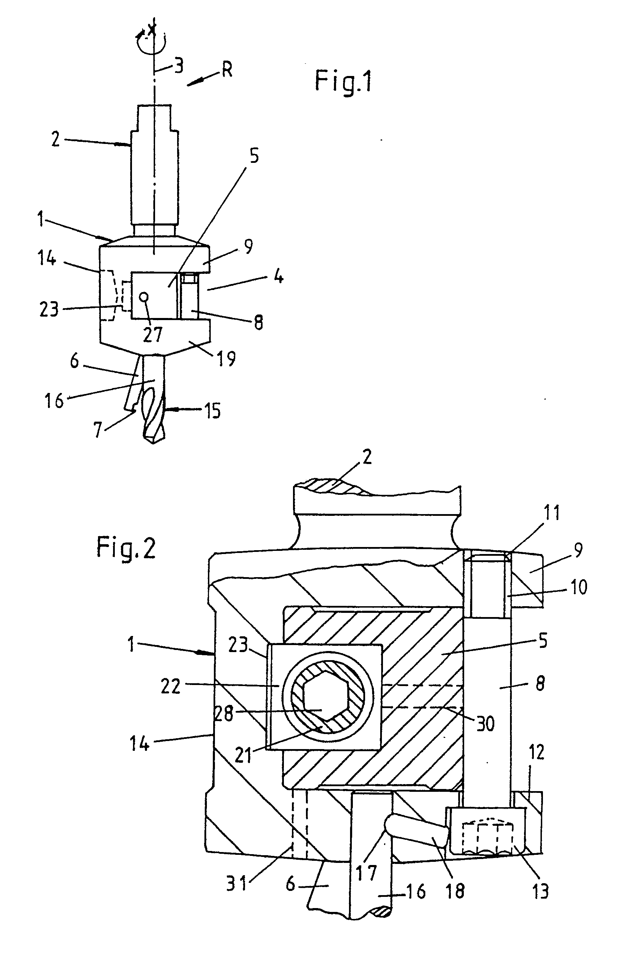

Ein in der Gesamtheit mit R bezeichnetes Schneid werkzeug weist ein Kopf stück 1 auf und besteht zusammmen mit einem Schaft 2 aus einem einzigen Stahlstück. Der Schaft 2 ist dazu bestimmt, in das Bohrfutter einer der Uebersichtlichkeit halber nicht dargestellten Bohrmaschine od.dgl. eingespannt zu werden, so dass sich das ganze Schneid werkzeug R wie in Fig. 1 mit Pfeilrichtung X dargestellt, um eine Achse 3 drehen kann.

Quer zu der Achse 3 ist im Kopfstück 1 eine Ausnehmung 4 vorhanden, die sich bis über die Mitte des Kopfstücks 1 erstreckt. Die seitlich offene Ausnehmung 4 dient zur Aufnahme eines Werkzeug halters 5, der in Radialrichtung - in bezug auf die Achse 3 - verschiebbar ist. An einem Ende dieses Werkzeug halters 5 befindet sich ein Schneidestahl 6 mit einer Schneide 7.

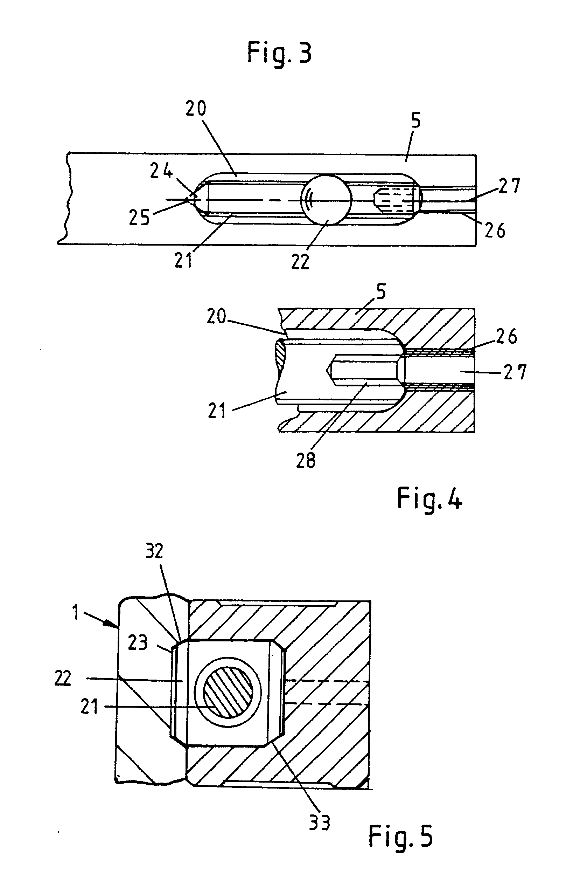

Der Werkzeug halter 5 wird mit Hilfe einer Gewindeschraube 8 in der Ausnehmung 4 festgeklemmt, indem durch diese Schraube 8 die Nutenbreite verringert werden kann, wodurch der Werkzeug halter 5 in der Ausnehmung 4 festgeklemmt wird. Zu diesem Zwecke durchsetzt die Schraube 8 im Kopfoberteil 9 mit einem Gewinde 10 (Figur 2) eine Bohrung 11 und stützt sich im Kopfunterteil 19 gegen eine Schulter 12 mit einem Schraubenkopf 13 ab. Die Schraube 8 verläuft somit parallel zur Achse 3. Damit die von der Schraube 8 aufzubringende Kraft zur federnden Deformierung des Materials nicht zu gross wird, ist auf, der der Ausnehmung 4 gegenüberliegenden Seite des Kopfstücks 1 eine Sacklochbohrung 14 vorgesehen ( in Figur 1 gestrichelt angedeutet), welche zugleich eine Unwucht bei hoher Drehzahl verhindert oder mindestens herabsetzt.

Auf der dem Schaft 2 gegenüberliegend en Seite ist in dem Kopfstück 1 ein kurzer Bohrer 15 mit einem zylindrischen hinteren Schaftteil 16 eingesetzt. Der Bohrer 12 verläuft koaxial zur Achse 3 und trägt am Schaftteil 16 eine Anbohrstelle 17, die mit einem Stift 18 zusammenwirkt. Dieser Stift 18 wird durch den Kopf 13 der Schraube 8 in die Anbohrstelle 17 hineingedrückt, so dass beim Festziehen der Schraube 8 gleichzeitig mit dem Klemmen des Werkzeug halters 5 auch der Bohrer 15 festgehalten wird.

Der Schneid stahl 6 ist bezüglich auf die Arbeitsdrehrichtung x nach rückwärts geneigt und zwar um einen Winkel von 6 bis 20°, vorzugsweise 10 bis 15°. Der Schneid stahl 6 ist zudem mit einem positiven Spanwinkel versehen und ist nach hinten freigeschliffen, so dass er nicht an den Nutenwandungen reiben kann und weist vorzugsweise einen Drall auf. Durch die Rückwärtsneigung ergibt sich beim Schneid stahl 6 eine gute Federwirkung, indem der Stahl beim Schneiden nach hinten ausreichen kann, wobei der werkzeung halter 5 auf Torsion beansprucht wird.

In dem Werkzeughalter 5 ist, wie in Fig.3 dargestellt, eine seitlich offene, muldenartig ausgebildete Ausnehmung 20 zur Aufnahme eines Bolzens 22 und einer damit wirkverbundenen Gewindespindel 21 vorgesehen. Die in Längsrichtung der Ausnehmung 20 orientierte Gewindespindel 21 durchdringt dabei den quer zu seiner Längsachse mit einem entsprechenden Gewinde (nicht bezeichnet) versehenen Bolzen 22. Zusammen bilden die Teile 21,22 eine Spindeleinheit.
Der Bolzen 22 ist in montiertem Zustand mit dem einen Ende, wie in Fig.2 in Schnittansicht dargestellt, in einer an der nicht näher bezeichneten Wand der [-förmigen Ausnehmung 4 des Kopfstücks 1 vorgesehenen Bohrung 23 arretiert. Die Bohrung 23 kann entweder mittig, d.h., korrespondieren zu der Achse 3, oder aber ausserhalb der Mitte an der Wand Ausnehmung 4 des Kopfstücks 1 angeordnet sein. Bei einem nicht dargestellten Ausführungsbeispiel können auch mehrere, in Reihe angeordnete Bohrungen 23 vorgesehen werden, so dass weitgehend jedem Bedarf nach einem bestimmten, durch das Schneidwerkzeug R erzeugten Ausdrehmass entsprochen werden kann.

Die Gewindespindel 21 greift mit dem einen, mit einer Spitze 24 versehenen Ende in eine Zentrierbohrung 25 der Ausnehmung 20 ein, während sie mit de anderen Ende durch eine in die Ausnehmung 20 ragende Zentrierhülse 26 gehalten ist. Die Zentrierhülse 26 wird, wie in Fig. 4 in grösserem Massstab dargestellt von einer Bohrung 27 in dem Werkzeug halter 5 aufgenommen und besteht vorzugsweise aus Kunststoff. Durch die Bohrung 27 bzw. Zentrierhülse 26 hindurch ist eine Innensechskantbohrung 28 in der Gewinde Spindel 21 für einen nicht dargestellten Sechskantschlüssel zugänglich. Dieser passt im übrigen auch in die als Innensechskantschraube ausgebildete Gewindeschraube 8 und in eine den Schneid stahl 6 einklemmende, nicht gezeigte Schraube. Ausserdem kann mit diesem Schlüssel in eine gestrichelt in Figur 2 gezeigte Bohrung 30 eingegriffen, und damit die Gewinde Spindel 21 mit dem Bolzen 22 aus der seitlich offenem Ausnehmung 20 gedrückt werden. Hierdurch ist es beispielsweise auf einfache Art möglich, die Spindeleinheit durch eine andere zu ersetzen, die beispielsweise eine andere Gewindesteigung aufweist. Alle Bedienungsfunktionen sind also mit einem Schlüssel vollziehbar, ebenso kann das gesamte Schneid werkzeug mit diesem einen Schlüssel zerlegt werden, wodurch die Reinigung erheblich vereinfacht ist.

Eine weitere Bohrung 31 im Kopfstück 1 erlaubt ein Anbohren des Werkzeug Halters 5 oder ein Einsetzen eines Zentrierstiftes in eine bereits im Werkzeug Halter 5 vorgesehene Bohrung. Damit wird die Wiederholgenauigkeit eines vorgegebenen Masses für einen Ausschnitt gewährleistet.

Zur Erleichterung der Anpassung durchdringt die Gewinde Spindel 21 den Bolzen 22 radial genau zentral. So ist es gleichgültig, wie herum die Spindeleinheit eingesetzt wird. Ausserdem kann nach Fig. 5 der Bolzen 22 eine konische Anfasung 32 aufweisen, was sein Einpassen in die Bohrung 23 und auch in die Ausnehmung 20 erleichtert. Entsprechend können der Ausnehmungs grund und Grund der Bohrung 23 Abflachungen 33 aufweisen, die mit der Anfasung 32 übereinstimmen. Auf diese Weise entsteht eine konische Kupplung, welche das Einsetzen des Bolzens 22 erleichtert und gegebenenfalls vorhandene Passungenauigkeiten ausgleicht.

Im Rahmen der Erfindung liegt auch der Gedanke, dass der Bolzen 22 ein- oder beidseits parallel zur Gewinde Spindel 21 abgeflacht ist. Dadurch kann die Ausnehmung 20 enger gehalten und deshalb weniger Material ausgetragen werden. Auch kann der Werkzeughalter Halter 5 bei gleichbleibender Wandstärke der Ausnehmung 20 kleiner gehalten und damit das Gewicht verringert werden. Zudem nimmt die Ausnehmung 20 weniger Schmutz oder Schneidspäne auf.

Durch diese neuen Einrichtungen ist das Schneid werkzeug R sehr flexibel einsetzbar. Auch bei festgeklemmtem Werkzeug Halter 5 kann die Gewinde Spindel 20 verstellt werden, da sie im drucklosen Teil des Kopfstücks 1 platziert ist und der Druckpunkt selbst in der optimalen Lage rangiert.

Durch die Kunststoffzentrierhülse 26 ergibt sich eine sehr gute Führung für das Verstellwerkzeug und ein optimales Einstellgefühl sowie eine sehr gute Halterung der Gewinde Spindel im Zusamnenwirken mit der Zentrierbohrung 25.

**Ansprüche**

1. Vorrichtung zum linearen Verstellen eines Werkzeughalters an einem Schneidwerkzeug, bei welchem der Werkzeughalter (5) in einer [-förmigen Ausnehmung (4) eines um eine Achse drehbar gelagerten Kopfstücks (1) angeordnet und von einer mit einem in eine Bohrung eingreifenden Bolzen wirkverbundenen Gewindespindel in bezug zur Achse (3) des Kopfstücks (1) in radialer Richtung verstellbar ist, dadurch gekennzeichnet, dass
   - in dem Werkzeughalter (5) eine in Richtung der Verstellbewegung orientierte und auf der der zugeordneten Wand der [-förmigen Ausnehmung (4) zugewandten Seite mit einer seitlich offenen Ausnehmung (20) zur Aufnahme des Bolzens (22) sowie der den Bolzen (22) quer zu seiner Achse durchdringenden und damit wirkverbundenen Gewindespindel (21) angeordnet ist, und
   - in montiertem Zustand des Werkzeughalters (5) der Bolzen (22) in eine in der zugeordneten Wand der [-förmigen Ausnehmung (4) des Kopfstücks (1) vorgesehene und entsprechend ausgebildete Bohrung (23) derart eingreift, dass bei Betätigung der Gewindespindel (21) der Werkzeughalter (5) relativ zu dem in der Bohrung (23) arretierten Bolzen (22) sowie zu der Achse (3) des Kopfstücks (1) verschiebbar ist.

2. Vorrichtung nach Anspruch 1, dadurch gekennzeichnet, dass der Bolzen (22) zur wirkverbindenden Aufnahme der Gewindespindel (21) mit einer entsprechenden, vorzugsweise in der Mitte seiner Längsachse und in radialer Richtung zentrisch den Bolzen (22) durchdringenden Gewindebohrung versehen ist, und dass der Bolzen (22) mit der Gewindespindel (21) als eine in die seitlich offene Ausnehmung (20) des Werkzeughalters (5) auswechselbar einzusetzende Spindeleinheit (21,22) ausgebildet ist.

3. Vorrichtung nach Anspruch 1 und 2, dadurch gekennzeichnet, dass die den Bolzen (22) sowie die Gewindespindel (21) umfassende Spindeleinheit (21,22) auf den Radius oder Durchmesser der jeweils auszudrehenden Werkstück-Öffnung voreinstellbar ausgebildet und die voreingestellte Spindeleinheit (21,22) in die seitlich offene Ausnehmung (20) des Werkzeughalters (5) einsetzbar ist.

4. Vorrichtung nach Anspruch 1, dadurch gekennzeichnet, dass in einer der Wände der [-förmigen Ausnehmung 4 des Kopfstücks (1), vorzugsweise in der senkrechten Wand der Ausnehmung (4) mindestens die mittig angeordnete und zur arretierenden Aufnahme des Bolzens (22) ausgebildete Bohrung (23), oder mehrere im Abstand zueinander angeordnete Bohrungen (23) vorgesehen sind.

5. Vorrichtung nach Anspruch 1, dadurch gekennzeichnet, dass die seitlich offene Ausnehmung (20) des Werkzeughalters (5) zur Aufnahme der Gewindespindel (21) an dem einen, vorderen Ende eine Zentrierbohrung (25) und an dem anderen, hinteren Ende eine mit der Ausnehmung (20) in Verbindung stehende Bohrung (27) aufweist, welche bei eingesetzter Spindeleinheit (21,22) korrespondierend zu einer in der Gewindespindel (21) vorgesehenen Innensechskantbohrung (28) angeordnet ist.

6. Vorrichtung nach Anspruch 5, dadurch gekennzeichnet, dass in der Bohrung (27) des Werkzeughalters (5) eine bis in die Ausnehmung (20) ragende, vorzugsweise aus elastischem Werkstoff, wie Kunststoff oder dergleichen hergestellte Zentrierhülse (26) angeordnet ist, mittels welcher die Spindeleinheit (21,22) klemmend und auswechselbar in der seitlich offenen Ausnehmung (20) gehalten ist.

7. Vorrichtung nach Anspruch 5 und 6, dadurch gekennzeichnet, dass zum Ausstossen der in den Werkzeughalter (5) eingesetzten Spindeleinheit (21,22) am hinteren Ende im Bereich der Bohrung (27) eine mit der Ausnehmung (20) in Verbindung stehende Bohrung (30) vorgesehen ist.

8. Vorrichtung nach Anspruch 1, dadurch gekennzeichnet,

dass in dem Kopfstück (1) mindestens eine bis in die Ausnehmung (4) reichende Bohrung (31) zur Aufnahme eines Stiftes vorgesehen ist, mittels welchem der Werkzeughalter˙ (5) jeweils wieder in seiner vorherigen Lage zentrierbar ist.

## Claims

1. A device for linear adjustment of a tool holder on a cutting tool, in which the tool holder (5) is arranged in a [-shaped recess (4) of a head piece (1) mounted in a rotatable manner around an axis, and able to be adjusted by a threaded spindle operatively connected to a bolt engaging in a bore, relative to the axis (3) of the head piece (1) in the radial direction, characterised in that
   - in the tool holder (5) there is arranged a threaded spindle (21) orientated in the direction of the adjusting motion and arranged on the side facing the associated wall of the [-shaped recess (4), said side having a recess (20) open on the side for accommodating the bolt (22), which threaded spindle (21) also penetrates the bolt (22), transverse to its axis, and is operatively connected therewith, and
   - in the assembled state of the tool holder (5) the bolt (22) engages a bore (23) provided in the assigned wall of the [-shaped recess (4) of the head piece (1) and correspondingly constructed, such that with activation of the threaded spindle (21) the tool holder (5) is able to be displaced relative to the bolt (22) in the bore (23) as well as to the axle (3) of the head piece (1).

2. A device according to claim 1, characterised in that the bolt (22) for operatively connected accommodation of the threaded spindle (21) is provided with a corresponding threaded bore, penetrating the bolt (22) centrally preferably in the centre of its longitudinal axis and in the radial direction, and in that the bolt (22) with the threaded spindle (21) is constructed as a spindle unit (21,22) to be inserted in an exchangeable manner into the recess (20) of the tool holder (5), open on the side.

3. A device according to claim 1 or 2, characterised in that the spindle unit (21,22) comprising the bolt (22) as well as the threaded spindle (21), is constructed in an adjustable manner to the radius or the diameter of the respective workpiece opening to be bored out and the preadjusted spindle unit (21,22) is able to be inserted into the recess (20) of the tool holder (5), open on the side.

4. A device according to claim 1, characterised that in one of the walls of the [-shaped recess 4 of the head piece (1), preferably in the perpendicular wall of the recess (4), at least the centrally arranged bore (23), constructed for blocking aocommodation of the bolt (22), or several bores (23) spaced from each other, are provided.

5. A device according to claim 1, characterised in that the recess (20) of the tool holder (5), open on the side, for accommodating the threaded spindle (21) on the one front end has a centring bore (25) and on the other, rear end, has a bore (27) connected to the recess (20), which is arranged with an inserted spindle unit (21,22) corresponding to a hexagonal recess (28) provided in the threaded spindle (21).

6. A device according to claim 5, characterised in that arranged in the bore (27) of the tool holder (5) there is a centering sleeve (26), projecting into the recess (20), preferably made of elastic material, such as plastic or the like, by means of which the spindle unit (21, 22) is held clamped and able to be exchanged in the recess (20), open on the side.

7. A device according to claim 5 and 6, characterised in that for ejecting the spindle unit (21,22) inserted into the tool holder (5), on the rear end in the region of the bore (27) there is provided a bore (30)connected to the recess (20).

8. A device according to claim 1, characterised in that in the head piece (1) at least one bore (31) projecting into the recess (4) for accommodating a pin is provided, by means of which the tool holder (5) is able to be centered again in each case in its previous position.

## Revendications

1. Dispositif pour régler linéairement un support d'outil sur un outil de coupe, pour lequel le support d'outil (5) est disposé dans un évidement (4) en forme de [ d'une pièce formant tête (1) montée tournante autour d'un axe et peut être réglé, dans la direction radiale, par rapport à l'axe (3) de la pièce formant tête (1), par une broche filetée associée positivement à un cylindre pénétrant dans un alésage, caractérisé en ce que,

- dans le support d'outil (5), une face orientée dans le sens du déplacement effectué pour le réglage et tournée vers la paroi correspondante de l'évidement (4) en forme de [ , comportant un évidement (20) ouvert latéralement, est disposée pour recevoir le cylindre (22) ainsi que la broche filetée (21) traversant le cylindre (22) perpendiculairement à son axe et associée positivement avec lui, et

- quand le support d'outil (5) est monté, le cylindre (22) s'engage dans un alésage (23) prévu dans la paroi correspondante de l'évidement (4) en forme de [ de la pièce formant tête (1) et réalisé en conséquence, de telle façon que, lorsqu'on agit sur la broche filetée (21), le support d'outil (5) peut coulisser par rapport au cylindre (22) bloqué dans l'alésage (23), ainsi que par rapport à l'axe (3) de la pièce formant tête (1).

2. Dispositif suivant la revendication 1, caractérisé en ce que le cylindre (22), recevant à engagement positif, la broche filetée (21), est muni d'un alésage fileté adapté, de préférence traversant le cylindre (22) au milieu de son axe longitudinal et en étant centré suivant la direction radiale, et en ce que le cylindre (22) avec la broche filetée (21) est réalisé sous la forme d'un ensemble de broche (21, 22) que l'on monte, de façon interchangeable, dans l'évidement (20) ouvert sur le côté du support d'outil (5).

3. Dispositif suivant la revendication 1 et la revendication 2, caractérisé en ce que l'ensemble de broche (21, 22), comportant le cylindre (22) et la broche filetée (21), est réalisé de façon à pouvoir être préréglé sur le rayon ou le diamètre de chaque ouverture de pièce à aléser concernée et en ce que l'ensemble de broche (21, 22) préréglée peut être installée dans l'évidement (20), ouvert sur le côté, du support d'outil (5).

4. Dispositif suivant la revendication 1, caractérisé en ce que, dans l'une des parois de l'évidement (4) en forme de [ de la pièce formant tête (1), de préférence dans la paroi verticale de l'évidement (4), est prévu au moins l'alésage (23), disposé au centre et réalisé pour recevoir, en le bloquant, le cylindre (22), ou que sont prévus plusieurs alésages (23) disposés à une certaine distance les uns des autres.

5. Dispositif suivant la revendication 1, caractérisé en ce que l'évidement (20), ouvert sur le côté, du support d'outil (5) pour recevoir la broche filetée (21) présente, à son extrémité avant, un alésage de centrage (25) et à son autre extrémité, arrière, un alésage (27), en liaison avec l'évidement (20), qui, lorsque l'ensemble de broche (21, 22) est monté, est disposé de façon à être en correspondance avec un alésage à six pans (28) creux, prévu dans la broche filetée (21).

6. Dispositif suivant la revendication 5, caractérisé en ce que, dans l'alésage (27) du support d'outil (5), est disposée une bague de centrage (26), dépassant jusque dans l' évidement (20), et fabriquée de préférence dans un matériau élastique, comme de la matière plastique ou similaire, bague au moyen de laquelle l'ensemble de broche (21, 22) est maintenu, bloqué et interchangeable, dans l'évidement (20) ouvert sur le côté.

7. Dispositif suivant la revendication 5 et la revendication 6, caractérisé en ce que, pour chasser l'ensemble de broche (21, 22) monté dans le support d'outil (5), il est prévu, à l'extrémité arrière, dans la zone de l'alésage (27), un alésage (30) relié avec l'évidement (20).

8. Dispositif suivant la revendication 1, caractérisé en ce que, dans la pièce formant tête (1), il est prévu au moins un alésage (31) pénétrant jusque dans l'évidement (4) pour recevoir une goupille au moyen de laquelle le support d'outil (5) peut être chaque fois centré de nouveau dans sa position précédente.

Fig.1

Fig.2

## Fig. 3

## Fig. 4

## Fig. 5